# EUROPEAN PATENT APPLICATION

(11) **EP 2 782 086 A1**
(43) Date of publication of application: **24.09.2014**
(21) Application number: 14160381.1
(22) Date of filing: 17.03.2014
(51) Int. Cl.: G08G 5/00, G01C 23/00, G01S 17/93, G02B 27/01

(54) **Methods and systems for colorizing an enhanced image during alert**

(30) Priority: 22.03.2013 US 201313849403
(71) Applicant: Honeywell International Inc., Morristown, NJ 07962-2245 (US)
(72) Inventor: Feyereisen, Thea L., Morristown, NJ New Jersey 07962-2245 (US); He, Gang, Morristown, NJ New Jersey 07962-2245 (US); Suddreth, John G., Morristown, NJ New Jersey 07962-2245 (US)
(74) Representative: Houghton, Mark Phillip

(57) **Abstract**

Methods and systems for improving presentation of terrain/obstacle alerting information in a composite (synthetic and sensor) image. An exemplary system includes an imaging device that obtains image data for a region exterior to the vehicle, a processing system, and a display device. The processing system is in data communication with the display device and the imaging device. The processing system receives information from an alerting (e.g., a terrain awareness and warning) system and the obtained image data, colors, or makes transparent at least a portion of the obtained image data, if the received information indicates that an alert condition exists for the portion of the obtained image data, and generates a composite image comprising a previously generated synthetic image and the obtained image data with the enhanced portion. The display device displays the composite image. The obtained image data overlie the synthetic image.

## Description

### BACKGROUND OF THE INVENTION

Modem flightdeck displays (or cockpit displays) for vehicles (such as an aircraft) convey a considerable amount of information, such as vehicle position, speed, altitude, attitude, navigation, target, and terrain information. In the case of an aircraft, most modem displays additionally show a flight plan from different views, either a lateral view, a vertical view, or a perspective view, which can be displayed individually or simultaneously on the same display. The perspective view provides a three-dimensional view of the vehicle's flight plan (or vehicle's forward path) and may include various map features including, for example, weather information, terrain information, political boundaries, and navigation aids (e.g., waypoint symbols, line segments that interconnect the waypoint symbols, and range rings). The terrain information may include situational awareness (SA) terrain, as well as terrain cautions and warnings, which, among other things, may indicate terrain that may obstruct the current flight path of the aircraft. In this regard, some modem flightdeck display systems incorporate a synthetic terrain display, which generally represents a virtual or computer-simulated view of terrain rendered in a conformal manner. The primary perspective view used in existing synthetic vision systems emulates a forward-looking cockpit viewpoint. Such a view is intuitive and provides helpful visual information to the pilot and crew.

The integrity of the synthetic terrain display is limited by the integrity of the information prestored in the database that is utilized to render the terrain. Accordingly, synthetic vision systems often utilize onboard imaging devices to augment or enhance the forward-looking cockpit view. For example, an enhanced vision system may use an infrared and/or millimeter wave video camera to sense objects and/or terrain features and render real-time imagery, based on the sensed objects and/or terrain features, that is overlaid onto the synthetic terrain display. In this manner, the enhanced vision system may provide higher integrity terrain imagery as well as imagery corresponding to various nonterrain features, such as other vehicles and buildings, which are not represented by *a priori* databases. These enhanced synthetic vision systems are particularly useful when operating a vehicle or aircraft in instrument meteorological conditions (IMC) or conditions of reduced visibility, such as, for example, whiteout, brownout, sea-spray, fog, smoke, low light or nighttime conditions, other inclement weather conditions, and the like. It is desirable that these enhanced vision systems be perceived quickly and intuitively without detracting from the situational awareness of the pilot and/or crew.

### SUMMARY OF THE INVENTION

The present invention provides methods and systems for improving the presentation of terrain/obstacle/intrusion alerting information in a composite (synthetic and sensor) image. An exemplary system includes an imaging device that obtains image data for a region exterior to the vehicle, a processing system, and a display device. The processing system is in data communication with the display device and the imaging device. The processing system receives information from an alerting system (e.g., a terrain awareness and warning system (TAWS)) and the obtained image data, enhances at least a portion of the obtained image data, if the received information indicates that an alert condition exist for the portion of the obtained image data, and generates a composite image comprising a previously generated synthetic image or the data associated with the synthetic image and the obtained image data with the enhanced portion. The display device displays the composite image. The obtained image data overlie the synthetic image.

In one aspect of the invention, the processing system enhances the portion of the obtained image data by coloring the portion of the obtained image data associated with the alert condition.

In another aspect of the invention, the processing system enhances the portion of the obtained image data by making the portion of the obtained image data associated with the alert condition at least partially transparent.

In still another aspect of the invention, the vehicle is an aircraft.

The present invention appropriately colors a threat on all terrain viewed in a combined vision system (CVS). By coloring the sensor image, an intuitiveness is brought to the cockpit display interpretation, thus allowing the pilot to easily move and interpret the data points from one image to another.

### BRIEF DESCRIPTION OF THE DRAWINGS

Preferred and alternative embodiments of the present invention are described in detail below with reference to the following drawings:
FIGURE 1 is a block diagram of a system formed in accordance with an embodiment of the present invention;
FIGURE 2 is an exemplary flightdeck display generated by the system shown in FIGURE 1; and
FIGURE 3 is a flow diagram of an exemplary process performed by the system shown in FIGURE 1.

### DETAILED DESCRIPTION OF THE INVENTION

The following detailed description is merely exemplary in nature and is not intended to limit the subject matter of the application and uses thereof. Furthermore, there is no intention to be bound by any theory presented in the preceding background or the following detailed description.

Technologies and concepts discussed herein relate to systems for visually partitioning real-time images received from an imaging device onboard a vehicle, such as an aircraft, to enhance the ability of a user (e.g., a pilot or crew member) to quickly and accurately determine the relative altitude and/or attitude or alerts of the features shown in the real-time images. The real-time images are partitioned using distinguishable characteristics, such as, for example, visually distinguishable colors or levels of transparency, to allow a pilot or crew member to intuitively identify the relative altitude and/or attitude or alert conditions of the respective portions of an image. Additionally, the visually distinguishable characteristics may be dynamically chosen (e.g., based on the phase of flight of the aircraft, the image quality, user-specified preferences, and the like) to provide a seamless transition between the surrounding display (e.g., the neighboring terrain when the images are laid over a synthetic perspective view of terrain) and to avoid distracting the pilot. Although the subject matter may be described herein in an aviation context, subject matter may be utilized with vehicles, such as ground-based vehicles, spacecraft or other agile vehicles, or maritime vessels.

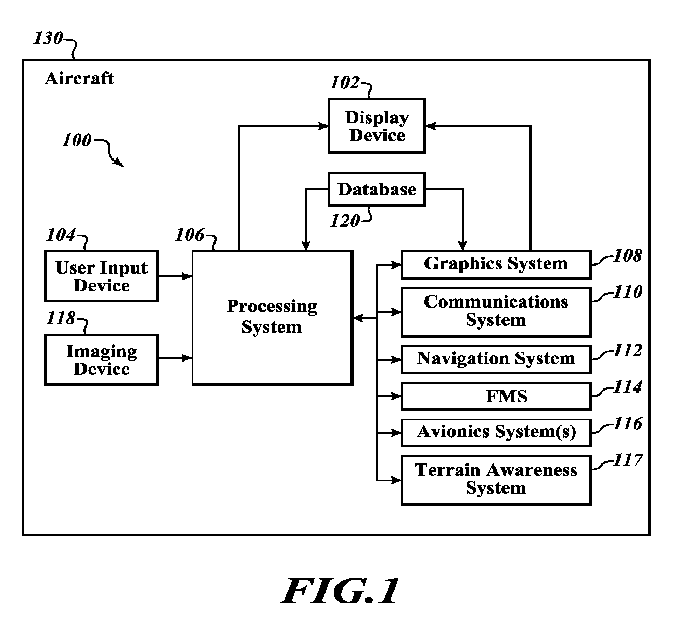

FIGURE 1 depicts an exemplary embodiment of a display system 100 that may be utilized for a vehicle, such as an aircraft 130. The display system 100 includes, without limitation, a display device 102, a user input device 104, a processing system 106, a graphics system 108, a communications system 110, a navigation system 112, a flight management system (FMS) 114, one or more avionics systems 116, a terrain awareness and warning system (TAWS) 117, an imaging device 118, and a database 120. The elements of the display system 100 are suitably configured to display, render, or otherwise convey an enhanced synthetic perspective view in a primary flight display (PFD) on the display device 102, as described in greater detail below. Alerting system other than the TAWS 117 may be used (e.g., traffic collision avoidance system (TCAS), hostile threat system).

It should be understood that FIGURE 1 is a simplified representation of the display system 100 for purposes of explanation and ease of description, and FIGURE 1 is not intended to limit the application or scope of the subject matter described herein in any way. It should be appreciated that, although FIGURE 1 shows the elements of the display system 100 as being located onboard the aircraft 130, in practice, one or more of the elements of display system 100 may be located outside the aircraft 130 (e.g., on the ground as part of an air traffic control center or another command center) and communicatively coupled to the remaining elements of the display system 100 (e.g., via a data link and/or communications system 110). For example, in some embodiments, the display device 102, the user input device 104, the imaging device 118 and/or the database 120 may be located outside the aircraft 130 and communicatively coupled to the other elements of the display system 100. Furthermore, practical embodiments of the display system 100 and/or aircraft 130 will include numerous other devices and components for providing additional functions and features, as will be appreciated in the art. In this regard, it will be appreciated that, although FIGURE 1 shows a single display device, in practice, additional display devices may be present onboard the aircraft 130.

The display device 102 is realized as an electronic display configured to graphically provide flight information or other data associated with operation of the aircraft 130 under control of the graphics system 108 and/or processing system 106. In this regard, the display device 102 is coupled to the graphics system 108 and the processing system 106, and the processing system 106 and the graphics system 108 are cooperatively configured to display, render, or otherwise convey one or more graphical representations or images associated with operation of the aircraft 130 on the display device 102, as described in greater detail below. The user input device 104 is coupled to the processing system 106, and the user input device 104 and the processing system 106 are cooperatively configured to allow a user (e.g., a pilot, copilot, or crew member) to interact with the display device 102 and/or other elements of the display system 100 in a conventional manner. Depending on the embodiment, the user input device 104 may be realized as a keypad, touchpad, keyboard, mouse, touch panel (or touchscreen), joystick, knob, line select key, or another suitable device adapted to receive input from a user. In some embodiments, the user input device 104 is realized as an audio input device, such as a microphone, audio transducer, audio sensor, or the like, that is adapted to allow a user to provide audio input to the display system 100 in a "hands free" manner without requiring the user to move his or her hands and/or head to interact with the display system 100. In accordance with one or more embodiments, the user input device 104 is adapted to receive input indicative of different visually distinguishable characteristics and to provide the input to the processing system 106 for displaying portions of image data obtained from imaging device 118 in accordance with the different visually distinguishable characteristics, as described in greater detail below.

The processing system 106 generally represents the hardware, software, and/or firmware components configured to facilitate communications and/or interaction between the display device 102 and the other elements of the display system 100 and perform additional tasks and/or functions to support displaying an enhanced synthetic perspective view of a primary flight display on the display device 102, as described in greater detail below. Depending on the embodiment, the processing system 106 may be implemented or realized with a general-purpose processor, a content-addressable memory, a digital signal processor, an application-specific integrated circuit, a field-programmable gate array, any suitable programmable logic device, discrete gate or transistor logic, processing core, discrete hardware components, or any combination thereof, designed to perform the functions described herein. The processing system 106 may also be implemented as a combination of computing devices, e.g., a plurality of processing cores, a combination of a digital signal processor and a microprocessor, a plurality of microprocessors, one or more microprocessors in conjunction with a digital signal processor core, or any other such configuration. In practice, the processing system 106 includes processing logic that may be configured to carry out the functions, techniques, and processing tasks associated with the operation of the display system 100, as described in greater detail below. Furthermore, the steps of a method or algorithm described in connection with the embodiments disclosed herein may be embodied directly in hardware, in firmware, in a software module executed by the processing system 106, or in any practical combination thereof. Although FIGURE 1 depicts processing system 106 as a distinct and separate element of the display system 100, in practice, the processing system 106 may be integrated with another element of the display system 100, such as the graphics system 108, the FMS 114, or the navigation system 112.

The graphics system 108 is coupled to the processing system 106, and the graphics system 108 generally represents the hardware, software, and/or firmware components configured to control the display and/or rendering of one or more navigational maps and/or other displays pertaining to operation of the aircraft 130 and/or the systems 110, 112, 114, 116, and 117 on the display device 102. In this regard, the graphics system 108 may access or include the one or more databases 120 that are suitably configured to support operations of the graphics system 108, such as, for example, a terrain database, an obstacle database, a navigational database, a geopolitical database, a terminal airspace database, a special-use airspace database, or other information for rendering and/or displaying content on the display device 102. In an exemplary embodiment, the graphics system 108 accesses the database 120 that includes positional (e.g., latitude and longitude), altitudinal, and other attribute information (e.g., terrain-type information, such as water, land area, or the like) for the terrain, obstacles, and other features to support rendering a three-dimensional conformal synthetic perspective view of the terrain proximate the aircraft 130, as described in greater detail below.

In an exemplary embodiment, the processing system 106 is coupled to the navigation system 112, which is configured to provide real-time navigational data and/or information regarding operation of the aircraft 130. The navigation system 112 may be realized as a global positioning system (GPS), inertial reference system (IRS), or a radio-based navigation system (e.g., VHF omnidirectional radio range (VOR) or long-range aid to navigation (LORAN)), and may include a radar altimeter, one or more navigational radios, or other sensors suitably configured to support operation of the navigation system 112, as will be appreciated in the art. The navigation system 112 is capable of obtaining and/or determining the instantaneous position of the aircraft 130, that is, the current location of the aircraft 130 (e.g., the current latitude and longitude) and the current altitude or above-ground level for the aircraft 130. Additionally, in an exemplary embodiment, the navigation system 112 includes inertial reference sensors capable of obtaining or otherwise determining the attitude or orientation (e.g., the pitch, roll, yaw, and heading) of the aircraft 130 relative to earth.

In the illustrated embodiment, the processing system 106 is also coupled to the communications system 110, which is configured to support communications to and/or from the aircraft 130. The communications system 110 is suitably configured to support communications between the aircraft 130 and air traffic control or another suitable command center or ground location. In this regard, the communications system 110 may be realized using a radio communication system or another suitable data link system.

In an exemplary embodiment, the processing system 106 is also coupled to the FMS 114. The FMS 114 maintains information pertaining to a flight plan for the aircraft 130. The FMS 114 is coupled to the navigation system 112, the communications system 110, and one or more additional avionics systems 116 to support navigation, flight planning, and other aircraft control functions in a conventional manner, as well as to provide real-time data and/or information regarding the operational status of the aircraft 130 to the processing system 106. Although FIGURE 1 depicts a single avionics system 116, in practice, the display system 100 and/or the aircraft 130 will likely include numerous avionics systems for obtaining and/or providing real-time flight-related information that may be displayed on the display device 102 or otherwise provided to a user (e.g., a pilot, a copilot, or crew member). For example, practical embodiment of the display system 100 and/or the aircraft 130 will likely include one or more of the following avionics systems suitably configured to support operation of the aircraft 130: a weather system, an air traffic management system, a radar system, a traffic-avoidance system, an autopilot system, an autothrust system, a flight control system, hydraulics systems, pneumatics systems, environmental systems, electrical systems, engine systems, trim systems, lighting systems, crew-alerting systems, electronic checklist systems, an electronic flight bag and/or another suitable avionics system.

In an exemplary embodiment, the FMS 114 (or another avionics system 116) is configured to determine, track, or otherwise identify the current flight phase of the aircraft 130. Various phases of flight are well known, and will not be described in detail herein.

In an exemplary embodiment, the imaging device 118 is coupled to the processing system 106 and generally represents the components of the display system 100 configured to capture, sense, or otherwise obtain real-time imagery (i.e., streaming video depending upon the rate of capturing) corresponding to an imaging region proximate the aircraft 130. In this regard, the imaging device 118 captures an image or frame corresponding to the imaging region at regular intervals (e.g., the refresh rate of the imaging device 118) for subsequent display on the display device 102, as described in greater detail below. In an exemplary embodiment, the imaging device 118 is realized as an infrared (IR) video camera or a millimeter wave (MMW) video camera that is mounted in or near the nose of the aircraft 130 and calibrated to align the imaging region with a particular location within a viewing region of a primary flight display rendered on the display device 102. For example, the imaging device 118 may be configured so that the geometric center of the imaging region is aligned with or otherwise corresponds to the geometric center of the viewing region. In this regard, the imaging device 118 may be oriented or otherwise directed substantially parallel to an anticipated line of sight for a pilot and/or crew member in the cockpit of the aircraft 130 to effectively capture a forward-looking cockpit view of the imaging region.

Although FIGURE 1 depicts the imaging device 118 as being located onboard the aircraft 130, in some embodiments, the imaging device 118 may be located outside the aircraft 130 and communicatively coupled to the processing system 106 via communications system 110. In this regard, in some embodiments, the processing system 106 may download image data corresponding to a previously flown approach, flight path, or trajectory, and correlate and/or synchronize the downloaded image data with the three-dimensional conformal synthetic perspective view of the terrain proximate the aircraft 130 rendered on the display device 102. In other embodiments, the imaging device 118 may be installed at a fixed location (e.g., an airport), wherein the processing system 106 may download real-time image data from the imaging device 118 and correlate the downloaded image data with the three-dimensional conformal synthetic perspective view of the terrain proximate the aircraft 130 rendered on the display device 102.

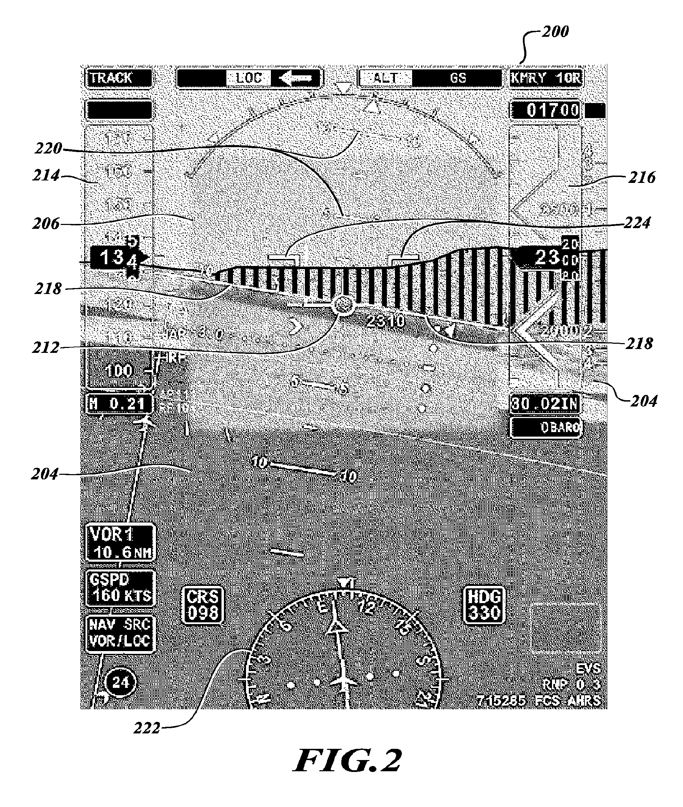

Referring now to FIGURE 2, and with continued reference to FIGURE 1, in an exemplary embodiment, the processing system 106 and the graphics system 108 are cooperatively configured to control the rendering of a composite image 200 on the display device 102. It should be appreciated that the composite image 200 as depicted in FIGURE 2 represents the state of a dynamic display frozen at one particular time, and that the composite image 200 may be continuously refreshed during operation of the aircraft 130 to reflect changes in the altitude and/or position of the aircraft 130.

In the illustrated embodiment, the composite image 200 includes several features that are graphically rendered, including, without limitation a synthetic perspective view of terrain (i.e., synthetic terrain image 204), a reference symbol 212 corresponding to the current flight path of the aircraft 130, an airspeed indicator 214 (or airspeed tape) that indicates the current airspeed of the aircraft 130, an altitude indicator 216 (or altimeter tape) that indicates the current altitude of the aircraft 130, a zero-pitch reference line 218, a pitch ladder scale 220, a compass 222, and an aircraft reference symbol 224, as described in greater detail below. The embodiment shown in FIGURE 2 has been simplified for ease of description and clarity of illustration - in practice, embodiments of the composite image 200 may also contain additional graphical elements corresponding to or representing pilot guidance elements, waypoint markers, flight plan indicia, flight data, numerical information, trend data, and the like. For the sake of clarity, simplicity, and brevity, the additional graphical elements of the composite image 200 will not be described herein.

In an exemplary embodiment, the synthetic terrain image 204 is based on a set of terrain data that corresponds to a viewing region proximate the current location of aircraft 130 that corresponds to the forward-looking cockpit viewpoint from the aircraft 130. The graphics system 108 includes or otherwise accesses the database 120 and, in conjunction with navigational information (e.g., latitude, longitude, and altitude) and orientation information (e.g., aircraft pitch, roll, heading, and yaw) from the processing system 106 and/or the navigation system 112, the graphics system 108 controls the rendering of the synthetic terrain image 204 on the display device 102 and updates the set of terrain data being used for rendering, as needed, as the aircraft 130 travels. As shown, in an exemplary embodiment, the graphics system 108 is configured to render the synthetic terrain image 204 in a perspective or three-dimensional view that corresponds to a flightdeck (or cockpit) viewpoint. In other words, the synthetic terrain image 204 is displayed in a graphical manner that simulates the flightdeck viewpoint, that is, the vantage point of a person in the cockpit of the aircraft. Thus, features of the synthetic terrain image 204 are displayed in a conformal manner, relative to the earth. For example, the relative elevations and altitudes of features in the synthetic terrain image 204 are displayed in a virtual manner that emulates reality (i.e., synthetic view). Moreover, as the aircraft navigates (e.g., turns, ascends, descends, rolls, etc.), the graphical representation of the synthetic terrain image 204 and other features of the perspective display shift to provide a continuously updated virtual representation for the flight crew.

As illustrated in FIGURE 2, in an exemplary embodiment, a graphical representation of the image data (alternatively referred to herein as the captured image 206) obtained from an imaging device 118 is displayed or rendered overlying the synthetic perspective view of the synthetic terrain image 204. In this regard, the composite image 200 of FIGURE 2 corresponds to an enhanced synthetic perspective view of the viewing region proximate the aircraft 130. The captured image 206 is based on image data obtained by the imaging device 118 for the imaging region proximate the aircraft 130, and the captured image 206 is positioned within the composite image 200 overlying the synthetic terrain image 204 in a manner that accurately reflects and/or corresponds to the approximate real-world location of the image data obtained by the imaging device 118 with respect to the real-world terrain depicted by the synthetic terrain image 204. As described above, the imaging device 118 is calibrated such that the captured image 206 is aligned with a particular location within the viewing region of the composite image 200 and corresponds to an anticipated line of sight for the forward-looking cockpit viewpoint. In other embodiments, the processing system 106 and/or the graphics system 108 may identify a feature within the image data (e.g., a runway) and align the identified feature with its corresponding graphical representation in the terrain data used for rendering the synthetic terrain image 204 to appropriately position the captured image 206 with respect to the synthetic terrain image 204. As described above, in an exemplary embodiment, the captured image 206 corresponds to an image (or a frame of video) obtained by an IR video camera or a MMW video camera. In this regard, the captured image 206 is updated at the refresh rate of the imaging device 118 to provide substantially real-time imagery (or video) for the imaging region on the composite image 200.

As described in greater detail below, in an exemplary embodiment, the processing system 106 and/or the graphics system 108 assigns a predefined color to the captured image 206 and the synthetic terrain image 204 when the associated real terrain is identified as hazardous by the TAWS 117 (e.g., enhanced ground proximity warning system (EGPWS) produced by Honeywell, Inc.^{®}). In one embodiment, the TAWS 117 sends a threat-array matrix of points to the processing system 106 and/or the graphics system 108. The processing system 106 and/or the graphics system 108 replaces the traditional colorization of the image from the imaging device 118 with the appropriate level of threat colorization (according to a predefined threat level color scheme). The colors (or shading, texturing, or graphical effects) used in the enhanced captured image 206 will preferably match those used to identify hazardous terrain in the synthetic terrain image 204, thus providing a seamless visual transition between the two images 204, 206. The enhanced captured and synthetic terrain images allow a pilot or crew member to quickly and intuitively ascertain the threat of the terrain ahead of the aircraft 130.

As illustrated in FIGURE 2, the flight path reference symbol 212, the airspeed indicator 214, the altitude indicator 216, the zero-pitch reference line 218, the pitch ladder scale 220, the compass 222, and the aircraft reference symbol 224 are displayed or otherwise rendered overlying the synthetic terrain image 204 and/or the captured image 206.

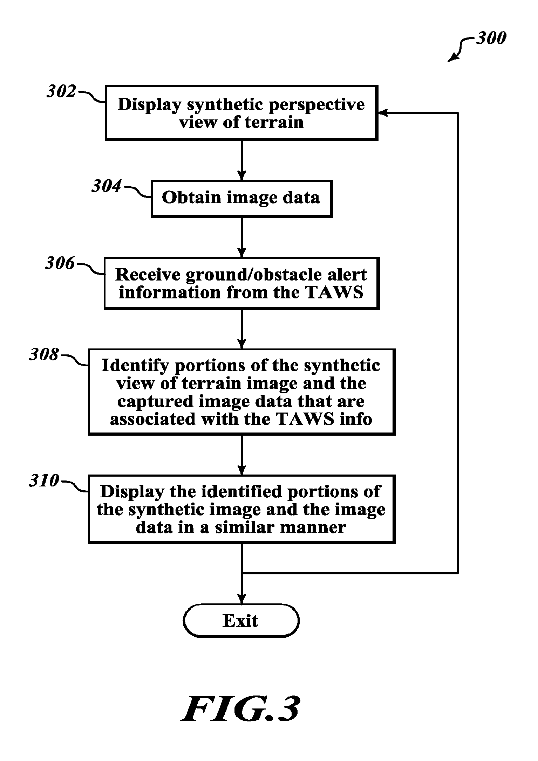

Referring now to FIGURE 3, in an exemplary embodiment, the display system 100 may be configured to perform a display process 300 and additional tasks, functions, and operations described below. The various tasks may be performed by software, hardware, firmware, or any combination thereof. For illustrative purposes, the following description may refer to elements mentioned above in connection with FIGURE 1. In practice, the tasks, functions, and operations may be performed by different elements of the described system, such as the display device 102, the user input device 104, the processing system 106, the graphics system 108, the communications system 110, the navigation system 112, the FMS 114, the avionics system(s) 116, the TAWS 117, the imaging device 118 and/ or the database 120. It should be appreciated that any number of additional or alternative tasks may be included, and may be incorporated into a more comprehensive procedure or process having additional functionality not described in detail herein.

Referring again to FIGURE 3, and with continued reference to FIGURES 1 and 2, a process 300 performed by the system 100 displays an image captured by the real-time imaging device 118 on the display device 102 onboard the aircraft 130. At a block 302, a three-dimensional synthetic perspective view of terrain for a viewing region proximate the aircraft is generated and displayed. In this regard, in an exemplary embodiment, the processing system 106 and/or the graphics system 108 is configured to obtain current navigational information and orientation information for the aircraft 130 and display or otherwise render the synthetic terrain image 204 corresponding to a forward-looking cockpit viewpoint in the composite image 200 on the display device 102. Next, at a block 304, image data corresponding to an imaging region proximate the aircraft 130 are obtained. In this regard, the imaging device(s) 118 capture, sense, or otherwise obtain real-time imagery for the imaging region and provide the corresponding image data to the processing system 106.

Then, at a block 306, the processing system 106 and/or the graphics system 108 receives ground/obstacle alert information from the TAWS 117, if an alert condition exists. At a block 308, the processing system 106 and/or the graphics system 108 identifies portions of the synthetic terrain image and the image data that are associated with the received ground/obstacle alert information.

At a block 310, the portions of the images associated with the TAWS information are presented in a similar manner. For example, the TAWS 117 has identified the upper 1,000 feet of a nearby mountain to be within a ground-proximity warning envelope, based on current aircraft position and heading. In this case, the portions of the synthetic image that are associated with the upper 1,000 feet of the nearby mountain are shaded red to indicate the warning alert condition. Also, the portions of the image from the imaging device 118 that are associated with the upper 1,000 feet of the nearby mountain (i.e., terrain image of the nearby mountain) are also shaded red. This provides a seamless view between the image from the imaging device 118 and the synthetic image (see FIGURE 2).

In one embodiment, the processing system 106 and/or the graphics system 108 causes the captured image 206 to be transparent only at the locations of the captured image 206 that correspond to the threat-array matrix of points sent from the TAWS 117. This allows the portion of the synthetic terrain image 204 that has already been colored (enhanced), according to the TAWS information, to be viewable. No colorization of the captured image 206 is required. The colorization from the synthetic terrain image 204 essentially replaces the associated captured-image terrain.

To briefly summarize, the methods and systems described above allow a user, such as a pilot or crew member, to quickly and intuitively ascertain any terrain/obstacle threats, using real-time imagery, that are displayed in the primary flight display.

For the sake of brevity, conventional techniques related to graphics and image processing, navigation, flight planning, aircraft controls, and other functional aspects of the systems (and the individual operating components of the systems) may not be described in detail herein. Furthermore, the connecting lines shown in the various figures contained herein are intended to represent exemplary functional relationships and/or physical couplings between the various elements. It should be noted that many alternative or additional functional relationships or physical connections may be present in an embodiment of the subj ect matter.

Techniques and technologies may be described herein in terms of functional and/or logical block components and with reference to symbolic representations of operations, processing tasks, and functions that may be performed by various computing components or devices. It should be appreciated that the various block components shown in the figures may be realized by any number of hardware, software, and/or firmware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices.

The foregoing description refers to elements or nodes or features being "coupled" together. As used herein, unless expressly stated otherwise, "coupled" means that one element/node/feature is directly or indirectly joined to (or directly or indirectly communicates with) another element/node/feature, and not necessarily mechanically. Thus, although the drawings may depict one exemplary arrangement of elements, additional intervening elements, devices, features, or components may be present in an embodiment of the depicted subject matter. In addition, certain terminology may also be used in the following description for the purpose of reference only, and thus is not intended to be limiting.

In one embodiment, terrain/obstacles alerts are represented as a geographic area of concern that is mapped to corresponding areas on the video image produced by the enhanced vision system (EVS) and EVS image characteristics are then modified based on the alert geographic area projected onto the EVS image. As such, the projection of alert is not restricted only to TAWs alert. A traffic alert (traffic signal from an on board traffic computer) could be of air or ground traffic. For example, a traffic alert is issued for an object within a protection zone, not just a point. A traffic alert can also be projected onto the EVS image to trigger color change and with associated information even though these small objects my not yet registered in the video image. In many cases, the EVS cannot see the air traffic objects ahead due to weather or resolution issues. Other examples could include a danger area associated with unfriendly forces. Information could be retrieved from a database, radar returns, or uplinked data sources. Any of this information could be projected onto the image. The geographically located threat is projected onto the EVS video image to highlight the threat area.

While the preferred embodiment of the invention has been illustrated and described, as noted above, many changes can be made without departing from the spirit and scope of the invention. Accordingly, the scope of the invention is not limited by the disclosure of the preferred embodiment. Instead, the invention should be determined entirely by reference to the claims that follow.

## Claims

1. A method for displaying information on a display device associated with a vehicle, the method comprising:
at an imaging device obtaining image data for an imaging region proximate the vehicle;
at a processing device,
receiving information from an alerting system located on the vehicle;
enhancing at least a portion of the obtained image data if the received information; and
generating a composite image with data available from a previously generated synthetic image and the obtained image data with the enhanced portion; and
at a display device displaying the composite image.

2. The method of Claim 1, wherein the alerting system comprises a terrain awareness system (TAWS) and the received information comprises at least one of a terrain or obstacle alert.

3. The method of Claim 1, wherein the composite image comprises the obtained image data overlying the synthetic image.

4. The method of Claim 3, wherein enhancing comprises coloring the portion of the obtained image data associated with the alert condition.

5. The method of Claim 3, wherein enhancing comprises making the portion of the obtained image data associated with the alert condition at least partially transparent.

6. A system comprising:
a display device located in a vehicle;
an imaging device configured to obtain image data for a region exterior to the vehicle; and
a processing system coupled to the display device and the imaging device, wherein the processing system is configured to
receive information from an alerting system and the obtained image data;
enhance at least a portion of the obtained image data if the received information indicates that an alert condition exists for the portion of the obtained image data; and
generate a composite image comprising a previously generated synthetic image and the obtained image data with the enhanced portion,
wherein the display device is configured to display the composite image.

7. The system of Claim 6, wherein:
the vehicle is an aircraft; and
the alerting system comprises a terrain awareness system (TAWS) and the received information comprises at least one of a terrain or obstacle alert.

8. The system of Claim 6, wherein the composite image comprises the obtained image data overlying the synthetic image.

9. The system of Claim 8, wherein the processing system enhances the portion of the obtained image data by coloring the portion of the obtained image data associated with the alert condition.

10. The system of Claim 8, wherein the processing system enhances the portion of the obtained image data by making the portion of the obtained image data associated with the alert condition at least partially transparent.
